# EUROPEAN PATENT APPLICATION

(11) **EP 4 615 159 A1**
(43) Date of publication of application: **10.09.2025**
(21) Application number: 22964099.0
(22) Date of filing: 04.11.2022
(51) Int. Cl.: H04W 92/18, H04L 27/00

(54) **INFORMATION PROCESSING METHOD AND APPARATUS, COMMUNICATION DEVICE AND STORAGE MEDIUM**

(71) Applicant: Beijing Xiaomi Mobile Software Co., Ltd., Beijing 100085 (CN)
(72) Inventor: SHANG, Zhengyi, Beijing 100085 (CN); LU, Wei, Beijing 100085 (CN)
(74) Representative: Gunzelmann, Rainer
(86) International application number: PCT/CN2022/130086
(87) International publication number: WO 2024/092796

(57) **Abstract**

Provided in the embodiments of the present disclosure are an information processing method and apparatus, a communication device and a storage medium. An information processing method performed by a first UE may comprise: sending a first request message, wherein the first request message comprises identification information of the first UE; and receiving a first response message returned on the basis of the first request message, wherein the first response message comprises a first key generated according to the identification information of the first UE, and the first key is used by the first UE to establish a secure link.

## Description

### FIELD

The present disclosure relates to the field of wireless communication technologies but is not limited to the field of wireless communication technologies, and particularly relates to an information processing method and apparatus, a communication device, and a storage medium.

### BACKGROUND

The fifth-generation mobile communication (5G) provides various services that may involve one or more user equipments (UEs), rather than a single UE directly interacting with a network device. For example, two UEs can communicate with each other directly through a sidelink (SL). This sidelink is generally based on the PC5 interface of the UE. In related research, it has been found that SL-based communication has security issues.

### SUMMARY

Embodiments of the present disclosure provide an information processing method and apparatus, a communication device and a storage medium.

A first aspect of the embodiments of the present disclosure provides an information processing method performed by a first UE, and the method includes: sending a first request message, where the first request message includes identification information of the first UE; receiving a first response message returned based on the first request message, where the first response message includes a first key generated based on the identification information of the first UE, where the first key is used by the first UE to establish a secure link.

A second aspect of the embodiments of the present disclosure provides an information processing method performed by a second UE, and the method includes: receiving a second request, where the second request message includes identification information of a source UE; sending a fourth request message based on the second request message; receiving a fourth response message returned based on the fourth request message, where the fourth response message at least includes a first key of the source UE, where the first key is used to establish a secure link.

A third aspect of the embodiments of the present disclosure provides an information processing method which is performed by a network device and includes: receiving a first request message, where the first message includes identification information of a first UE; returning a first response message based on the first request message, where the first response message includes a first key generated based on the identification information of the first UE; the first key is used to establish a secure link.

A fourth aspect of the embodiments of the present disclosure provides an information processing apparatus, where the apparatus includes: a first sending module configured to send a first request message, where the first request message includes identification information of the first UE; a first receiving module configured to receive a first response message returned based on the first request message, where the first response message includes a first key generated based on the identification information of the first UE; the first key is used by the first UE to establish a secure link.

A fifth aspect of the embodiments of the present disclosure provides an information processing apparatus, where the apparatus includes: a second receiving module configured to receive a second request message, where the second request message includes identification information of a source UE; a second sending module configured to send a fourth request message based on the second request message; the second receiving module is further configured to receive a fourth response message returned based on the fourth request message, where the fourth response message at least includes a first key of the source UE, where the first key is used to establish a secure link.

A sixth aspect of the embodiments of the present disclosure provides an information processing apparatus, where the apparatus includes: a third receiving module configured to receive a first request message, where the first message includes identification information of a first UE; a third sending module configured to return a first response message based on the first request message, where the first response message includes a first key generated based on the identification information of the first UE; the first key is used to establish a secure link.

A seventh aspect of the embodiments of the present disclosure provides a communication device which includes a processor, a transceiver, a memory, and an executable program stored in the memory and runnable by the processor, where the processor runs the executable program to perform the information processing method according to any one of the first to third aspects.

An eighth aspect of the embodiments of the present disclosure provides a computer storage medium having stored therein an executable program that, when executed by a processor, causes the information processing method according to any one of the first to third aspects to be implemented.

A ninth aspect of the embodiments of the present disclosure provides a communication system which includes:

a first UE configured to perform the information processing method according to any technical solution of the first aspect;

a second UE configured to perform the information processing method according to any technical solution of the second aspect; and a network device configured to perform the information processing method according to any technical solution of the third aspect.

According to the technical solutions provided by the embodiments of the present disclosure, the first UE sends a first request message containing its own identification information, so that the first key used by the first UE to establish a secure link is generated separately based on the identification information of the first UE. Subsequently, the first UE can use this key to establish the secure link, thereby ensuring the communication security of the first UE.

It should be understood that the above general description and the following detailed description are exemplary and explanatory only and do not limit the present disclosure.

### BRIEF DESCRIPTION OF THE DRAWINGS

The drawings, which are incorporated in and constitute a part of this specification, illustrate embodiments consistent with the present disclosure and, together with the description, and is used to explain the principles of the present disclosure.
FIG. 1 is a structural diagram of a wireless communication system according to an exemplary embodiment;
FIGS. 2A to 2G are flowcharts of an information processing method performed by a first UE according to an exemplary embodiment;
FIGS. 3A to 3D are flowcharts of an information processing method performed by a second UE according to an exemplary embodiment;
FIGS. 4A to 4D are flowcharts of an information processing method performed by a network device according to an exemplary embodiment;
FIG. 5A is a flowchart of an information processing method according to an exemplary embodiment;
FIG. 5B is a flowchart of an information processing method according to an exemplary embodiment;
FIG. 6A is a structural diagram of an information processing apparatus according to an exemplary embodiment;
FIG. 6B is a structural diagram of an information processing apparatus according to an exemplary embodiment;
FIG. 7 is a structural diagram of an information processing apparatus according to an exemplary embodiment;
FIG. 8 is a structural diagram of a UE according to an exemplary embodiment; and
FIG. 9 is a structural diagram of a network device according to an exemplary embodiment.

### DETAILED DESCRIPTION

Here, exemplary embodiments will be described in detail, examples of which are illustrated in the drawings. When the following description refers to the drawings, unless otherwise indicated, the same numbers in different drawings represent the same or similar elements. The implementations described in the following exemplary embodiments do not represent all implementations consistent with the embodiments of the present disclosure. Instead, they are merely examples of devices and methods consistent with some aspects of the embodiments of the present disclosure.

The terminology used in the embodiments of the present disclosure is for the purpose of describing particular embodiments only and is not intended to limit the present disclosure. The singular forms "a," "an," and "the" used in the present disclosure are also intended to include plural forms, unless the context clearly indicates otherwise. It should also be understood that the terms "and/or" as used herein refer to and include any or all possible combinations of one or more of the associated listed items. It should be understood that although the terms "first," "second," "third," etc. may be used in the embodiments of the present disclosure to describe various information, such information should not be limited by these terms. These terms are only used to distinguish the same type of information from another. For example, without departing from the scope of the embodiments of the present disclosure, first information may also be referred to as second information, and similarly, second information may also be referred to as first information. Depending on the context, the word "if" as used herein may be interpreted as "when" "upon", or "in response to determining".

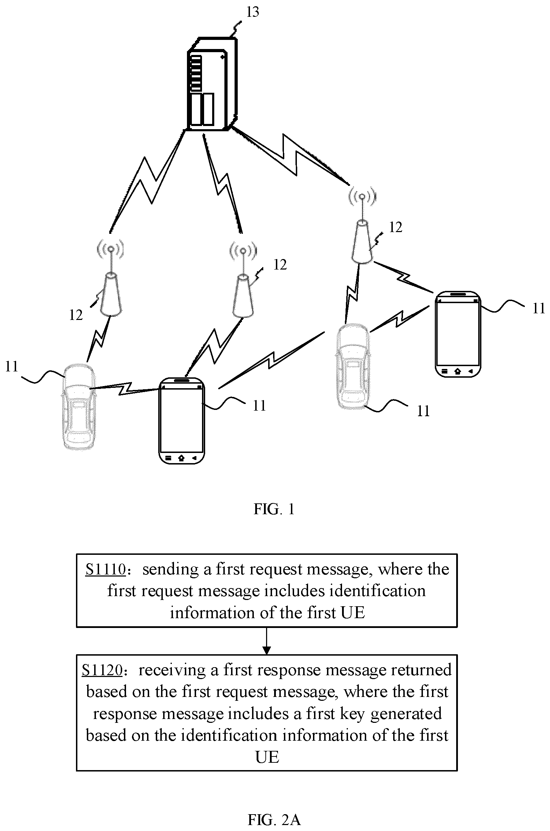

Please refer to FIG. 1, which shows a structural diagram of a wireless communication system according to an embodiment of the present disclosure. As shown in FIG. 1, the wireless communication system is a communication system based on cellular mobile communication technology and may include: a plurality of UEs 11 and a plurality of access devices 12.

The UE 11 may refer to a device that provides voice and/or data connectivity to a user. The UE 11 may communicate with one or more core networks via a radio access network (RAN). The UE 11 may be an Internet of Things (IoT) terminal, such as a sensor device, a mobile phone (or cellular phone), or a computer with an IoT terminal, and may be, for example, a stationary, portable, pocket-sized, handheld, computer-built-in, or vehicle-mounted device. For example, the UE 11 may be a station (STA), subscriber unit, subscriber station, mobile station, mobile, remote station, access point, remote terminal, access terminal, user terminal, user agent, user device, or user equipment (UE). Alternatively, the UE 11 may be a device of an unmanned aerial vehicle. Alternatively, the UE 11 may be a vehicle-mounted device, such as a driving computer with wireless communication functions or a wireless communication device externally connected to a driving computer. Alternatively, the UE 11 may be a roadside device, such as a streetlight, traffic light, or other roadside device with wireless communication functions.

The access device 12 may be a network device in the wireless communication system. The wireless communication system may be a fourth-generation mobile communication technology (4G) system. The wireless communication system may also be a next-generation system after the 5G system. The access network in the 5G system may be referred to as a new generation-radio access network (NG-RAN). Alternatively, the wireless communication system may be a machine-type communication (MTC) system.

The access device 12 may be an evolved access device (eNB) used in the 4G system. Alternatively, the access device 12 may be an access device (gNB) using a centralized distributed architecture in the 5G system. When the access device 12 adopts a centralized distributed architecture, it typically includes a central unit (CU) and at least two distributed units (DUs). The central unit is provided with protocol stacks such as a packet data convergence protocol (PDCP) layer, a radio link control (RLC) layer, and a media access control (MAC) layer. The distributed unit is provided with a physical (PHY) layer protocol stack. The specific implementation of the access device 12 is not limited in the embodiments of the present disclosure.

The 5G communication system proposes a user equipment to user equipment (U2U) proximity service (ProSe) that allows communication between a source UE and a target UE through a U2U relay. This means that if the source UE cannot directly reach the target UE, it will attempt to discover a U2U relay to reach the target UE. That is, the source UE communicates with the target UE through the U2U relay. In fact, as an untrusted node, the U2U relay may be compromised, thereby jeopardizing the security of information between the peer UEs. A malicious U2U relay can establish unicast connections with the source UE and the target UE separately and perform a man-in-the-middle (MITM) attack on the source UE and/or the target UE, compromising the security of the 5G U2U ProSe service. The 5G ProSe service supports U2U relays, accommodating both Layer 2 (L2) and Layer 3 (L3) U2U relay options. For L3 U2U relays, the PC5 packet data convergence protocol (PDCP) messages of the source UE must be converted into another PC5 PDCP message sent to the target UE. Therefore, in the presence of a U2U relay, the security of one-to-one PC5 communication between the source UE and the target UE cannot be established. The source UE and the target UE communicate indirectly through the U2U relay, connected via two PC5 links: the PC5 link between the source UE and the U2U relay and the PC5 link between the U2U relay and the target UE. This means that the implementation of secure communication between the source UE and the target UE will rely on the security protection of each PC5 link.

The first UE may include, but is not limited to, at least one of the following:
a source UE and/or target UE of a relay service, where the relay service includes, but is not limited to, a U2U ProSe service;
a reference UE and target UE of a ranging/sidelink positioning service; the source UE of the ranging service may be a UE requesting ranging or a reference UE; the target UE of the ranging service may be a UE being measured.

The second UE may include, but is not limited to, at least one of the following:
a U2U relay of a relay service, such as a U2U relay of a U2U ProSe service;
an auxiliary UE of a ranging UE.

The network device may include any device located on the network side. For example, the network device includes, but is not limited to, a core network device, where the core network device includes, but is not limited to: a proximity key management function (PKMF) entity and/or a direct discovery name management function (DDNMF) of the first UE and/or the second UE. The PKMF is responsible for handling key management and providing security parameters. The DDNMF is responsible for providing security parameters during the discovery phase.

The identification information of the UE may be any information identifying the UE, such as a user information identifier (UserInfoID), an Internet Protocol (IP) address, or a device identifier, a restricted ProSe application user ID (RPAUID), a ProSe remote user key ID (PRUKID), a subscription concealed identifier (SUCI), etc.

The user information identifier may include an application layer identifier. For example, the format of the UserInfoID may be the same as the network access identifier (NAI) format or may be a 64-bit string. If the user information ID is in the NAI format, for example, in the form of username@realm, the realm should include the home network identifier of the UE. The home network identifier may be: the identifier of the home public land mobile network (HPLMN).

A secure link refers to a link where the messages for establishing the link are protected for security using keys according to a security policy, thereby establishing a secure link. Security protection may include, but is not limited to: confidentiality protection and integrity protection. The definitions of confidentiality protection and/or integrity protection can be found in related technologies. The aforementioned secure link includes, but is not limited to, a PC5 link or an SRS link.

The service code may be an identifier of the service, which may include, but not limited to, a relay service code (RSC) or a ProSe code.

As shown in FIG. 2A, an embodiment of the present disclosure provides an information processing method performed by a first UE, where the method includes the following steps.
S1110: sending a first request message, where the first request message includes identification information of the first UE;
S1120: receiving a first response message returned based on the first request message, where the first response message includes a first key generated based on the identification information of the first UE; the first key is used by the first UE to establish a secure link.

For example, the first request message may be a ProSe key request message.

The identification information of the first UE may be any information identifying the first UE. For example, the user information identifier (UserInfoID) of the first UE, an Internet Protocol (IP) address, or a device identifier. In short, the identification information of the first UE may be any information that can identify the first UE. The user information identifier may be an application layer identifier.

The first key carried in the first request message may be used by the network device to generate a first key for the first UE to use individually.

The first response message may be any message returned based on the first request message. The peer device receiving the first request message may be a peer device that generates the first key, which includes, but not limited to, a network device and/or a server for a predetermined service.

The first response message may include the first key.

The first key may be used in the link establishment messages between the first UE and other UEs, enabling the first UE to establish a secure link.

For example, the first key may be a root key or an intermediate key, which can be used to derive session keys for message exchange. For example, the first key may be a ProSe remote user key (PRUK).

The security protection here includes, but is not limited to: integrity protection and/or confidentiality protection.

In the embodiments of the present disclosure, a secure link refers to a link where the messages for establishing the link are protected for security using keys, thereby establishing a secure link. In the embodiments of the present disclosure, the first key can be directly used to establish a secure link or to derive keys used in the process of establishing a secure link.

For example, the other UE may be a second UE. The second UE may be any UE different from the first UE. For example, the secure link established between the first UE and the second UE is based on the PC5 interface. That is, the secure link may be a secure PC5 link or SRS link.

In this way, the first UE can establish a secure link with the second UE through information exchange with the network device.

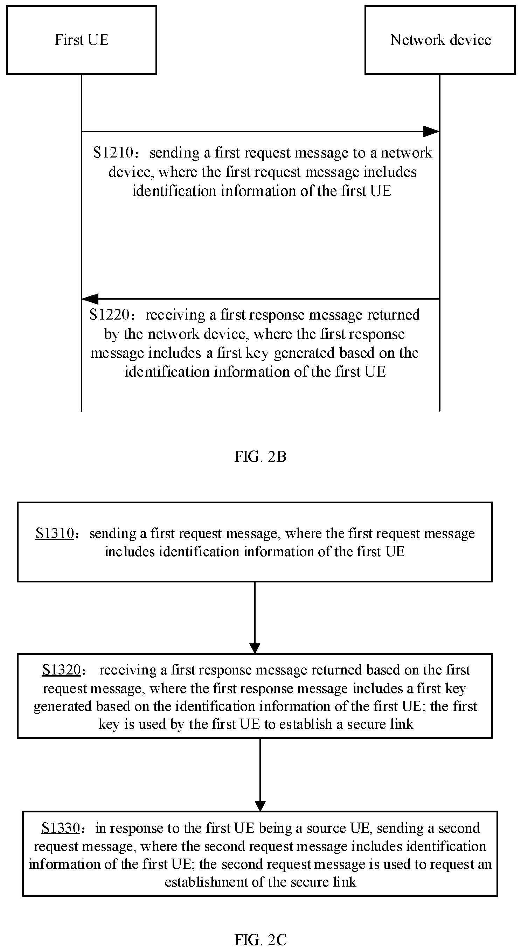

For example, as shown in FIG. 2B, an embodiment of the present disclosure provides an information processing method performed by a first UE, where the method includes the following steps.
S1210: sending a first request message to a network device, where the first request message includes identification information of the first UE;
S1220: receiving a first response message returned by the network device, where the first response message includes a first key generated based on the identification information of the first UE; the first key is used by the first UE to establish a secure link with the second UE.

The first request message may be any message sent by the first UE to the network device.

For example, a network device may provide key management and/or security parameter-related services to multiple UEs. After different UEs send first request messages containing their own identification information, the network device can generate first keys for these UEs respectively.

For example, the first request message may further include a service code, enabling the network device or other peer devices to generate a first key for the first UE specific to the service identified by the service code. After receiving the first request message, the network device may return a first response message, which includes at least: a key for establishing a secure link between the first UE and the second UE.

In some embodiments, the first response message further includes an identifier of the first key. For example, the first key has a key identifier (ID).

In the embodiments of the present disclosure, the ID of the first key is an optional content of the first response message.

If the first request message is the aforementioned ProSe key request message, the first response message may be a ProSe key response message.

It should be noted that the embodiment shown in FIG. 2C can be implemented alone or in combination with any embodiment in FIG. 2A.

As shown in FIG. 2C, an embodiment of the present disclosure provides an information processing method performed by a first UE, where the method includes the following steps.
S1310: sending a first request message, where the first request message includes identification information of the first UE;
S1320: receiving a first response message returned based on the first request message, where the first response message includes a first key generated based on the identification information of the first UE; the first key is used by the first UE to establish a secure link.
S1330: in response to the first UE being a source UE, sending a second request message, where the second request message includes identification information of the first UE; the second request message is used to request an establishment of the secure link.

In one embodiment, the second request message may include an identifier of the source UE. In another embodiment, the second request message may further include an identifier of the target UE.

The peer receiving the second request message may be any device that assists in communication between the source UE and the target UE.

The first key of the source UE may be used to establish a secure link between the source UE and the peer receiving the second request message.

It should be noted that the embodiment shown in FIG. 2C can be implemented alone or in combination with any embodiment in FIG. 2A or FIG. 2B.

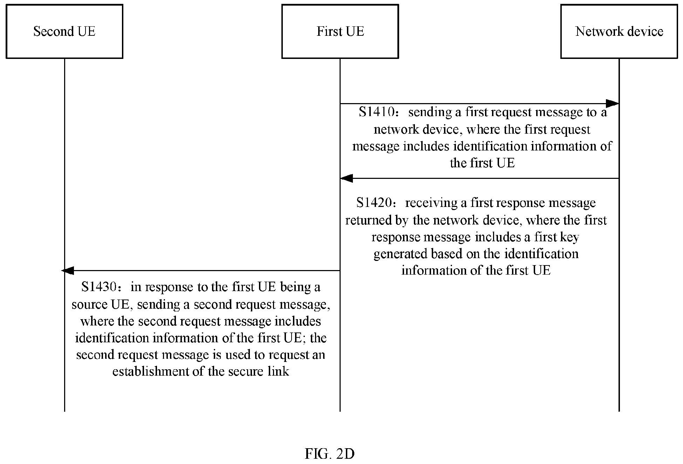

As shown in FIG. 2D, an embodiment of the present disclosure provides an information processing method performed by a first UE, where the method includes the following steps.
S1410: sending a first request message to a network device, where the first request message includes identification information of the first UE;
S1420: receiving a first response message returned by the network device, where the first response message includes a first key generated based on the identification information of the first UE; the first key is used by the first UE to establish a secure link.
S1430: in response to the first UE being a source UE, sending a second request message, where the second request message includes identification information of the first UE; the second request message is used to request an establishment of the secure link.

In the embodiments of the present disclosure, since the first UE is the source UE of the U2U relay or the source UE initiating the ranging service, after receiving the first key, the second request message may be broadcasted when there is a demand for the U2U relay service requirement or ranging service requirement.

The second request message will include the identification information of the source UE itself and the identification information of the target UE.

Therefore, when any UE which can serve as the second UE receives the broadcasted second request message, the UE can determine whether it can serve as a U2U relay between the source UE and the target UE, or whether it can assist in ranging between the source UE and the target UE.

In some embodiments, the second request message includes, but is not limited to, a direct communication request message.

If the first response message includes the ID of the first key, the second request message may further include the ID of the first key.

In some embodiments, the second request message may further include a service code indicating the service requested by the source UE.

For example, the service code may be a relay service code (RSC), in which case the source UE may be the source UE of the U2U relay. As another example, the service code may also be a ranging service code (RSC), in which case the source UE may be the UE initiating the ranging or the starting position UE being measured. As yet another example, the service code may also be a ProSe code, in which case the source UE may be the source UE of the U2U relay.

It should be noted that the embodiment shown in FIG. 2D can be implemented alone or in combination with any embodiment in FIG. 2A or FIG. 2B.

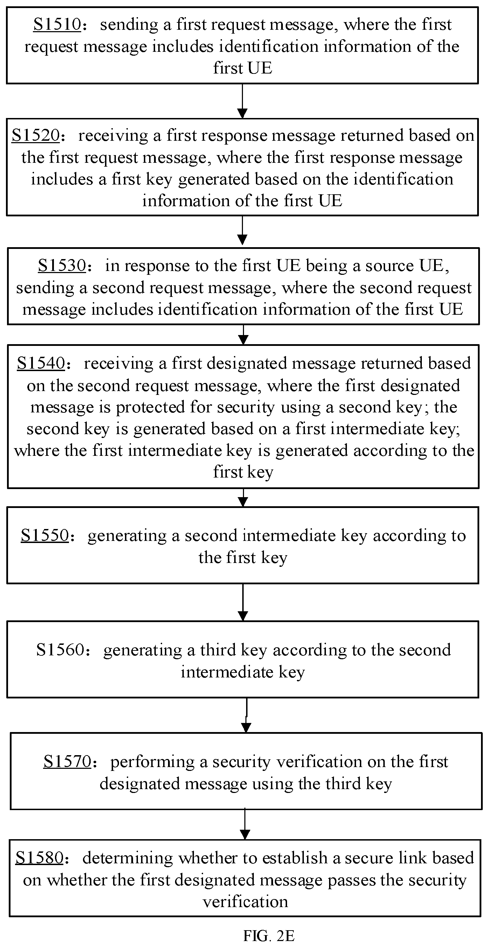

As shown in FIG. 2E, an embodiment of the present disclosure provides an information processing method performed by a first UE, where the method includes the following steps.
S1510: sending a first request message, where the first request message includes identification information of the first UE;
S1520: receiving a first response message returned based on the first request message, where the first response message includes a first key generated based on the identification information of the first UE; the first key is used by the first UE to establish a secure link.
S1530: in response to the first UE being a source UE, sending a second request message, where the second request message includes identification information of the first UE;
S1540: receiving a first designated message returned based on the second request message, where the first designated message is protected for security using a second key; the second key is generated based on a first intermediate key, where the first intermediate key is generated according to the first key;
S1550: generating a second intermediate key according to the first key;
S1560: generating a third key according to the second intermediate key;
S1570: performing a security verification on the first designated message using the third key;
S1580: determining whether to establish a secure link based on whether the first designated message passes the security verification.

In the above embodiment, the first designated message may be a request message sent by the second UE. If there is a second UE around the first UE, the second UE will return the first designated message to the first UE after receiving the first request message.

The first designated message may include, but is not limited to, a direct security mode command.

The first key may be a root key. The network device will derive or generate a first intermediate key based on the first key. The first intermediate key may include, but is not limited to, a new radio PC5 key (Knrp).

The second key and the third key are both session keys. The session key may include: a confidentiality key for confidentiality protection, such as for message encryption and decryption; and/or an integrity protection key for message integrity protection.

In this way, the first UE can generate the third key at one time based on the first key, or like the network device, first generate an intermediate key and then generate a third key based on the intermediate key.

After generating the third key, a security verification is performed on the first designated message using the third key. The security verification includes, but is not limited to: confidentiality verification and/or integrity verification.

If both confidentiality verification and integrity verification are required for the first designated message, the confidentiality verification and integrity verification may use the same or different third keys. If different keys are used for confidentiality verification and integrity verification, the security of the first designated message and the security of the established link may be further enhanced.

It should be noted that the embodiment shown in FIG. 2E can be implemented alone or in combination with any embodiment in FIG. 2A to FIG. 2D.

That is, in some embodiments, the method further includes: sending a first request message to a network device, where the first request message includes identification information of the first UE; receiving a first response message returned by the network device, where the first response message includes a first key; the first key is used by the first UE to establish a secure link with the second UE; in response to the first UE being a source UE, sending a second request message, where the second request message includes identification information of the first UE and identification information of the target UE; the identification information of the first UE is used by the second UE to obtain a key for establishing a secure link with the first UE; the identification information of the target UE is used by the second UE to obtain a key for connecting with the target UE; receiving a first designated message returned by the second UE, where the first designated message is protected for security using a second key; the second key is generated based on a first intermediate key, where the first intermediate key is generated according to the first key; generating a second intermediate key according to the first key; generating a third key according to the second intermediate key; performing a security verification on the first designated message using the third key; determining whether to establish a secure link based on whether the first designated message passes the security verification.

In some embodiments, determining whether to establish a secure link with the second UE based on whether the first designated message passes the security verification includes: determining to establish a secure link with the second UE when the security verification is passed; and/or refusing to establish a secure link with the second UE when the security verification is not passed.

If the security verification is passed, the first UE may send a message indicating that the secure link has been established to the second UE. The message includes, but is not limited to, a direct security mode complete message, indicating that the secure link has been successfully established. If the security verification is not passed, the first UE will not send a message indicating that the secure link has been established to the second UE. For example, the direct security mode complete message is not sent to the second UE.

In some embodiments, the second request message includes a first freshness value, where the first freshness value is provided by the second UE to the network device and used to generate the first intermediate key.

The first freshness value is provided by the first UE. For example, since the first key can be repeatedly used to generate session keys, to ensure that the generated session keys are different, a freshness value is introduced during the generation of the intermediate key. The first freshness value may be related to the number of times the first UE generates the second intermediate key or the number of times the first UE initiates the generation of the second intermediate key. In this way, the first intermediate key and the second intermediate key generated at different times will be different. Similarly, the first freshness value may also be used by the first UE itself to generate the second intermediate key. For example, the second UE locally generates the first intermediate key based on the first key provided by the network device and the first freshness value.

In some embodiments, the second request message may not include the first freshness value. In this case, both the first UE and the second UE can generate the first intermediate key and the second intermediate key based on the first key obtained from the network device.

In one embodiment, the second request message includes a first random number, where the first random number and the second intermediate key are jointly used by the first UE to generate the third key. The first random number here can be used to generate the session key. Since the second request message is directly sent to the second UE, upon receiving the second request message, the second UE can generate the second key by combining the first random number carried in the second request message with the first intermediate key it generated.

In the embodiments of the present disclosure, key generation algorithms may adopt those in related technologies. For example, they can be generated according to algorithms agreed upon in protocols, which will not be repeated here.

In some embodiments, the first designated message further includes a second freshness value, where the second freshness value is further used by the network device to generate the first intermediate key; the second freshness value is further used by the first UE to generate the second intermediate key.

When the second UE requests the first key from the network device, the network device also sends the second freshness value to the second UE. This second freshness value can similarly be used to generate the first intermediate key and the second intermediate key. For example, in one embodiment, when the first UE and the second UE generate the first intermediate key and the second intermediate key respectively, only one freshness value is needed, which comes from either the first UE or the network device, i.e., the aforementioned second freshness value. As another example, when the first UE and the second UE generate the first intermediate key and the second intermediate key, two freshness values are needed, namely the aforementioned first freshness value and second freshness value. The second freshness value is carried in plaintext in the first designated message. Thus, after receiving the first designated message, the first UE can directly extract the second freshness value to generate the third key and use the third key to perform the security verification on the first designated message.

In one embodiment, the first designated message further includes a second random number; the second random number and the second intermediate key are used by the first UE to generate the third key.

Since the introduction of the first random number and the second random number ensures that even if the first UE and the second UE generate the second key and the third key based on the same intermediate key, as long as either the first random number or the second random number changes, the second key and the third key generated this time will be different.

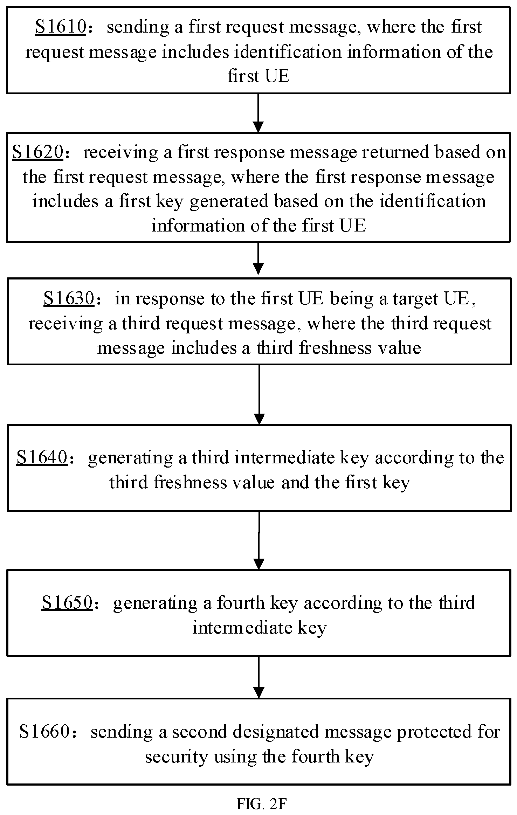

As shown in FIG. 2F, an embodiment of the present disclosure provides an information processing method performed by a first UE, where the method includes the following steps.
S1610: sending a first request message, where the first request message includes identification information of the first UE;
S1620: receiving a first response message returned based on the first request message, where the first response message includes a first key generated based on the identification information of the first UE; the first key is used by the first UE to establish a secure link;
S1630: in response to the first UE being a target UE, receiving a third request message, where the third request message includes a third freshness value;
S1640: generating a third intermediate key according to the third freshness value and the first key;
S1650: generating a fourth key according to the third intermediate key;
S1660: sending a second designated message protected for security using the fourth key.

If the first UE is the target UE, it will first receive a third request message sent by the second UE. The third request message may include, but is not limited to, a direct communication request message.

The third request message may include a third freshness value provided by the communication peer or received by the communication peer from other devices. This third freshness value can be any parameter value used to update the intermediate key corresponding to the target UE.

Thus, the target UE can generate a third intermediate key based on the first key and then establish a secure link using the fourth key.

In another embodiment, the third request message may further include a fourth freshness value. If the third request message includes both the third freshness value and the fourth freshness value, the third intermediate key and the fourth intermediate key are generated based on the third freshness value and the fourth freshness value, respectively.

After generating the third intermediate key, the fourth key is further generated by combining one or more random numbers.

After protecting the second designated message for confidentiality and/or integrity using the fourth key, the second designated message is sent to the second UE.

The second designated message may include, but is not limited to, a direct security mode command.

In other embodiments, the third intermediate key and the fourth intermediate key may be generated based on only one freshness value, which may be the fourth freshness value provided by the second UE. After generating the third intermediate key, the fourth key is further generated by combining one or more random numbers.

It should be noted that the embodiment shown in FIG. 2F can be implemented alone or in combination with any embodiment in FIG. 2A to FIG. 2E.

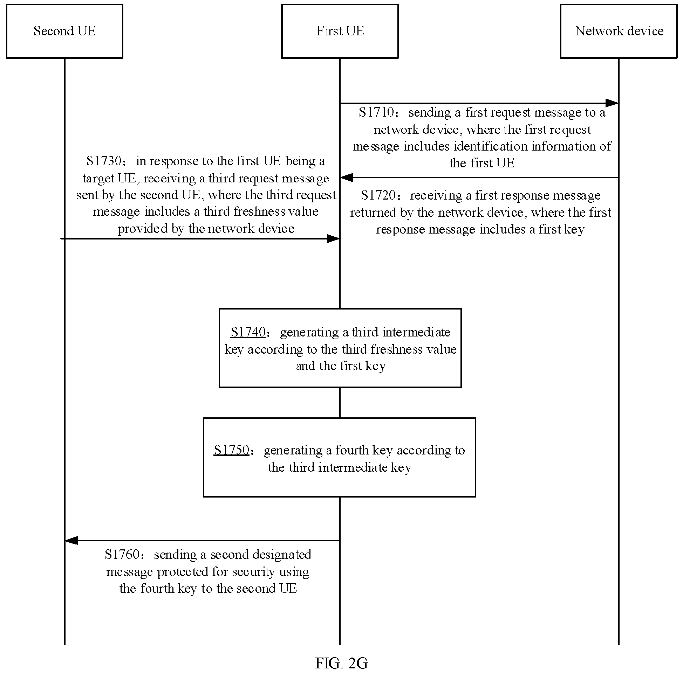

As shown in FIG. 2G, an embodiment of the present disclosure provides an information processing method performed by a first UE, where the method includes the following steps.
S1710: sending a first request message to a network device, where the first request message includes identification information of the first UE;
S1720: receiving a first response message returned by the network device, where the first response message includes a first key; the first key is used by the first UE to establish a secure link with the second UE;
S1730: in response to the first UE being a target UE, receiving a third request message sent by the second UE, where the third request message includes a third freshness value provided by the network device;
S1740: generating a third intermediate key according to the third freshness value and the first key;
S1750: generating a fourth key according to the third intermediate key;
S1760: sending a second designated message protected for security using the fourth key to the second UE.

After receiving the third request message, the third freshness value is extracted from the third request message, and the third intermediate key is generated by combining the third freshness value with the first key.

In another embodiment, the third request message may further include a fourth freshness value provided by the second UE. If the third request message includes both the third freshness value and the fourth freshness value, the first UE and the second UE generate the third intermediate key and the fourth intermediate key based on the third freshness value and the fourth freshness value, respectively.

In one embodiment, the third freshness value is used to generate a fourth intermediate key, where the fourth intermediate key is used to generate a fifth key for verifying the second designated message.

For example, the third freshness value is used by the network device to generate the fourth intermediate key, where the fourth intermediate key is used by the second UE to generate the fifth key for verifying the second designated message.

For example, the third request message includes a third random number; the third random number is used by the first UE to generate the fourth key and by the second UE to generate the fifth key.

The third random number may be generated by the second UE.

The second designated message at least includes a fourth random number;

The fourth random number is used by the first UE to generate the fourth key and by the second UE to generate the fifth key. That is, both the fourth key and the fifth key can be generated based on the third random number and the fourth random number.

It should be noted that the embodiment shown in FIG. 2G can be implemented alone or in combination with any embodiment in FIG. 2A to FIG. 2F.

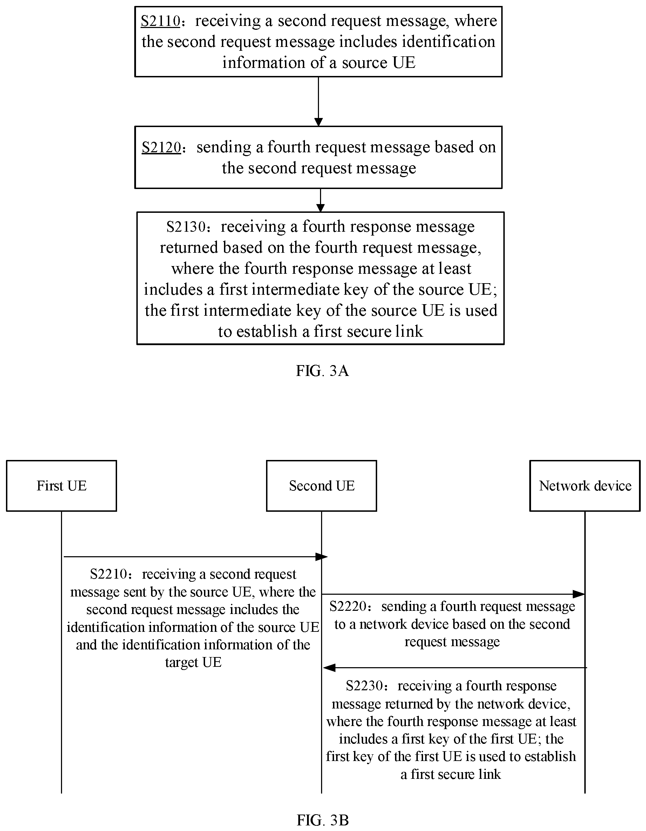

As shown in FIG. 3A, an embodiment of the present disclosure provides an information processing method performed by a second UE, where the method includes the following steps.
S2110: receiving a second request message, where the second request message includes identification information of a source UE;
S2120: sending a fourth request message based on the second request message;
S2130: receiving a fourth response message returned based on the fourth request message, where the fourth response message at least includes a first intermediate key of the source UE; the first intermediate key of the source UE is used to establish a first secure link.

The second UE may receive the second request message forwarded by the source UE or other devices. The second request message at least includes the identification information of the source UE.

The fourth request message includes the identification information of the source UE, which can be used to query the first key generated based on the identification information of the source UE or the first key related to the identification information of the source UE, and generate the first intermediate key based on the first key.

If the second UE is authorized to participate in a predetermined service, it will receive the fourth response message containing the first intermediate key of the source UE.

After receiving the first intermediate key of the source UE, the second UE can establish the first secure link with the source UE. The description of the secure link here can refer to any of the aforementioned embodiments. That is, the first secure link includes, but is not limited to, a secure link between the source UE and the second UE.

The predetermined service may be a U2U relay service and/or ranging service. For example, the second UE may be a U2U relay in a U2U relay service, or an auxiliary UE for a ranging UE.

If the second UE is not authorized to participate in the predetermined service, the received fourth response message may be a rejection message that does not include the first intermediate key of the source UE.

For example, as shown in FIG. 3B, an embodiment of the present disclosure provides an information processing method performed by a second UE, where the method includes the following steps.
S2210: receiving a second request message sent by the source UE, where the second request message includes the identification information of the source UE and the identification information of the target UE;
S2220: sending a fourth request message to a network device based on the second request message;
S2230: receiving a fourth response message returned by the network device, where the fourth response message at least includes a first key of the first UE; the first key of the first UE is used to establish a first secure link.

The second UE receives the second request message sent by the source UE, which may be the first UE provided in any of the aforementioned technical solutions.

After receiving the second request message sent by the source UE, the second UE will request the first intermediate key of the source UE and the fourth intermediate key corresponding to the target UE from the network device based on the identification of the source UE and the identification of the target UE included in the second request message. For example, the identification information of the source UE will be carried in the fourth request message.

The identification information of the source UE may include a user information identifier, an IP address, or other identification information.

In some cases, the fourth request message in any of the aforementioned embodiments may further include a service code for the predetermined service.

For example, if the second UE is authorized to provide the predetermined service to the source UE and the target UE, the fourth response message may at least include the first intermediate key of the source UE.

This first key can be used to establish a secure link between the second UE and the source UE. This secure link is a PC5/SR5 link where messages are protected for security during the link establishment process, or a PC5/SR5 link. The PC5 link or SRS link is a link based on the PC5 interface.

In some embodiments, the second request message includes a first freshness value.

The first freshness value is used to generate the first intermediate key, where the first intermediate key is used to generate a second key for establishing a secure connection.

For example, after the first freshness value is included in the fourth request message and sent to the network device, it is used by the network device to generate the first intermediate key, where the first intermediate key is used by the second UE to generate the second key for establishing a secure connection with the first UE.

In some embodiments, the second request message further includes a first random number; the first random number is used to generate the second key and the third key. Here, the second key and the third key are both session keys.

The session key may include: an integrity protection key and/or a confidentiality protection key.

For example, the first random number is used by the second UE to generate the second key in combination with the first intermediate key.

For example, the first random number is further used by the source UE to generate the third key in combination with the second intermediate key.

It should be noted that if no message is tampered with and both the source UE and the second UE are valid UEs, the first intermediate key and the second intermediate key should be the same, and the second key and the third key will also be the same.

In some embodiments, the method further includes:
sending a first designated message based on the fourth response message.

The first designated message may be the aforementioned direct security mode command message.

For example, the method further includes:
sending the first designated message to the source UE based on the fourth response message.

The first designated message may be the aforementioned direct security mode command message.

For example, if the third response message includes the first key of the source UE, the first designated message is sent to the source UE to continue establishing the first secure link with the source UE.

In some embodiments, the first designated message includes a second freshness value; the second freshness value is used to generate a third key for verifying the security of the first designated message.

For example, the second freshness value is used by the source UE to generate the third key for verifying the security of the first designated message.

The second freshness value may be a parameter generated by the network device.

In one embodiment, the first key and the second freshness value can be used as input parameters for generating the first intermediate key and the second intermediate key.

In another embodiment, the second request message includes a first freshness value. In this case, the first freshness value, the second freshness value, and the first key are used to generate the first intermediate key and the second intermediate key, respectively.

In some other embodiments, the fourth response message includes the first intermediate key generated by the network device; the first intermediate key is used by the second UE to generate the second key.

In some embodiments, the method further includes:
establishing the first secure link after the first designated message passes the security verification.

For example, after the first designated message passes the security verification, the first secure link is established with the source UE.

For example, if the first designated message passes the security verification, the second UE will receive a direct security mode complete message sent by the source UE.

In one embodiment, the second UE simultaneously executes the establishment of secure links with the source UE and the target UE. However, to further ensure the security of the links, in the embodiments of the present disclosure, the second UE will initiate the establishment of the secure link with the target UE only after successfully establishing a secure link with the source UE.

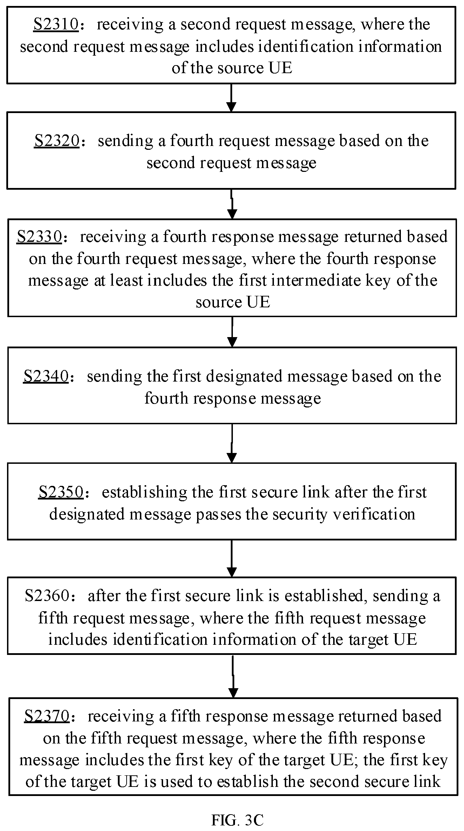

As shown in FIG. 3C, an embodiment of the present disclosure provides an information processing method performed by a second UE, where the method includes the following steps.
S2310: receiving a second request message, where the second request message includes identification information of the source UE;
S2320: sending a fourth request message based on the second request message;
S2330: receiving a fourth response message returned based on the fourth request message, where the fourth response message at least includes the first intermediate key of the source UE; the first intermediate key of the source UE is used to establish the first secure link;
S2340: sending the first designated message based on the fourth response message;
S2350: establishing the first secure link after the first designated message passes the security verification;
S2360: after the first secure link is established, sending a fifth request message, where the fifth request message includes identification information of the target UE;
S2370: receiving a fifth response message returned based on the fifth request message, where the fifth response message includes the first key of the target UE; the first key of the target UE is used to establish the second secure link.

If the second UE is authorized to participate in the predetermined service, the fifth response message may include the first key of the target UE related to the identification information of the target UE.

For example, the fifth request message may include a fourth freshness value or may not include a fourth freshness value. The fourth freshness value may be provided by the second UE.

If the fifth request message includes the fourth freshness value, the fourth intermediate key generated by the network device will be based on the first key of the target UE, the third freshness value, and the fourth freshness value.

If the fifth request message does not include the fourth freshness value, the fourth intermediate key generated by the network device is based on the third freshness value and the first key of the target UE.

It should be noted that the embodiment shown in FIG. 3C can be implemented alone or in combination with any embodiment in FIG. 3A to FIG. 3B.

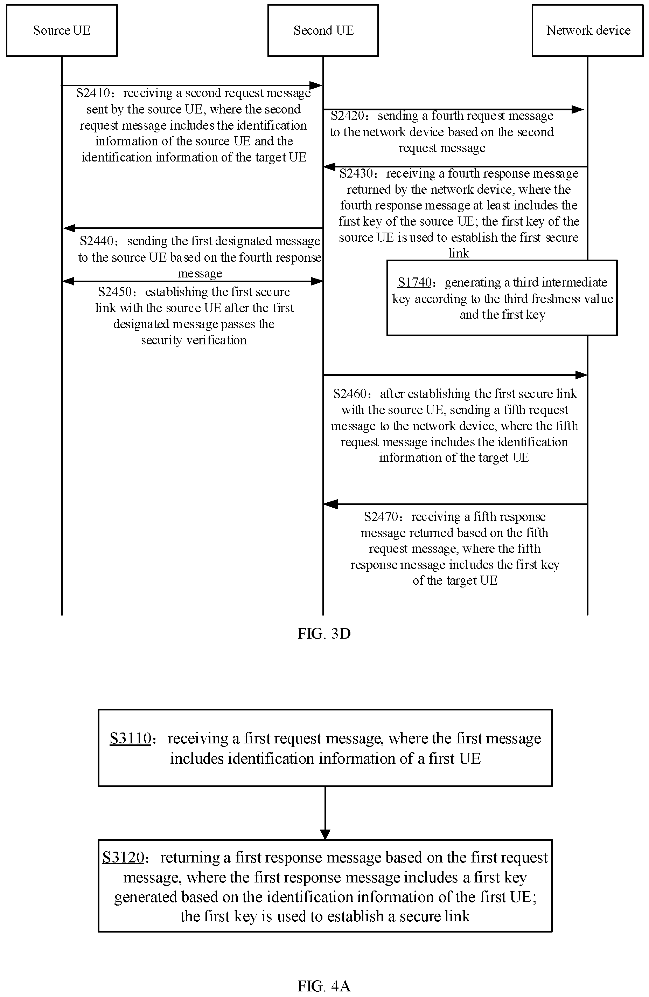

As shown in FIG. 3D, an embodiment of the present disclosure provides an information processing method performed by a second UE, where the method includes the following steps.
S2410: receiving a second request message sent by the source UE, where the second request message includes the identification information of the source UE and the identification information of the target UE;
S2420: sending a fourth request message to the network device based on the second request message, where the fourth request message at least includes the identification information of the source UE;
S2430: receiving a fourth response message returned by the network device, where the fourth response message at least includes the first key of the source UE; the first key of the source UE is used to establish the first secure link;
S2440: sending the first designated message to the source UE based on the fourth response message;
S2450: establishing the first secure link with the source UE after the first designated message passes the security verification;
S2460: after establishing the first secure link with the source UE, sending a fifth request message to the network device, where the fifth request message includes the identification information of the target UE;
S2470: receiving a fifth response message returned based on the fifth request message, where the fifth response message includes the first key of the target UE; the first key of the target UE is used to establish the second secure link between the second UE and the target UE.

In the embodiments of the present disclosure, after the second UE establishes a secure link with the target UE, it sends a fifth request message to the serving network device of the target UE (e.g., the PKMF or DDNMF of the target UE). The fifth request message at least includes the identification information of the target UE. The identification information of the target UE includes, but is not limited to, the user information identifier of the target UE.

If the second UE is authorized to provide the predetermined service to the source UE and the target UE, the fifth response message will be an acceptance message; otherwise, it may be a rejection message. Alternatively, if the second UE is not authorized to provide the predetermined service to the source UE and the target UE, the second UE may not receive the rejection message.

In some embodiments, the fifth response message includes a third freshness value; the third freshness value is used by the target UE to generate the third intermediate key; the third freshness value is further used by the network device to generate the fourth intermediate key;

The third intermediate key is used by the target UE to generate the fourth key for establishing a secure link with the second UE;

The fourth intermediate key is used by the second UE to generate the fifth key for establishing a secure link with the target UE.

If the messages in the link establishment process are not tampered with during transmission, and both the target UE and the second UE are valid UEs, the third intermediate key and the fourth intermediate key should be the same, and the fourth key and the fifth key should also be the same.

It should be noted that the embodiment shown in FIG. 3D can be implemented alone or in combination with any embodiment in FIG. 3A to FIG. 3C.

In some embodiments, the method further includes: sending a third request message based on the fifth response message; receiving a second designated message returned based on the third request message; verifying the security of the second designated message using the fifth key; and determining whether to establish the second secure link based on the verification result of the security of the second designated message.

If the fifth response message includes the first key of the target UE, the second UE will send the third request message, which may include, but is not limited to, a direct communication request message.

At this time, the second UE will receive the returned second designated message, which can also be considered a type of request message. The second designated message may include, but is not limited to, a direct security mode command message.

Of course, in the embodiments of the present disclosure, the direct communication request message, direct security mode command message, and direct security mode complete message mentioned can be replaced with other messages that can complete the corresponding functions, such as specially configured messages.

For example, the method further includes: sending the third request message to the target UE based on the fifth response message; receiving the second designated message returned by the target UE based on the third request message; verifying the security of the second designated message using the fifth key; and determining whether to establish a secure link with the target UE based on the verification result of the security of the second designated message.

If the fifth response message includes the first key of the target UE, the second UE will send the third request message to the target UE, which may include, but is not limited to, a direct communication request message.

At this time, the target UE will return the second designated message, which can also be considered a type of request message. The second designated message may include, but is not limited to, a direct security mode command message.

Of course, in the embodiments of the present disclosure, the direct communication request message, direct security mode command message, and direct security mode complete message mentioned can be replaced with other messages that can complete the corresponding functions, such as specially configured messages.

The second UE locally generates the fifth key. After receiving the second designated message, it can perform security verification on the second designated message, such as confidentiality verification and integrity verification. If the second designated message passes the security verification, it can be considered that the current message is secure, and a secure link can be established. Therefore, the second UE will send a direct security mode complete message to the target UE, indicating that the second UE and the target UE have completed the secure link.

That is, determining whether to establish a secure link with the target UE based on the verification result of the security of the second designated message includes: establishing a secure link with the target UE after the verification of the second designated message using the fifth key is passed.

As shown in FIG. 4A, an embodiment of the present disclosure provides an information processing method performed by a network device, where the method includes the following steps.
S3110: receiving a first request message, where the first message includes identification information of a first UE;
S3120: returning a first response message based on the first request message, where the first response message includes a first key generated based on the identification information of the first UE; the first key is used to establish a secure link.

The network device may be any device. The peer interacting with the network device may be the aforementioned first UE, but it is not limited to the first UE and may further include an access device and/or a relay device of the first UE.

The first request message may be a ProSe key request message. For example, the first key may include, but is not limited to, a PRUK.

If the first request message is a ProSe key request message, the first response message may be a ProSe key response message.

The first key is generated based on the identification information of the first UE, which may include: the identification information of the first UE can be used as an input parameter for generating the first key of the first UE, or the identification information of the first UE may not be used as the output parameter, but the first keys of different UEs are different. For example, after the first key of the first UE is generated, it will be related to the identification information of the first UE and stored correspondingly in the network device.

The generation of the first key can provide the key required for a single UE to establish a secure link. The first key may be a root key and/or an intermediate key for the first UE to establish a secure link.

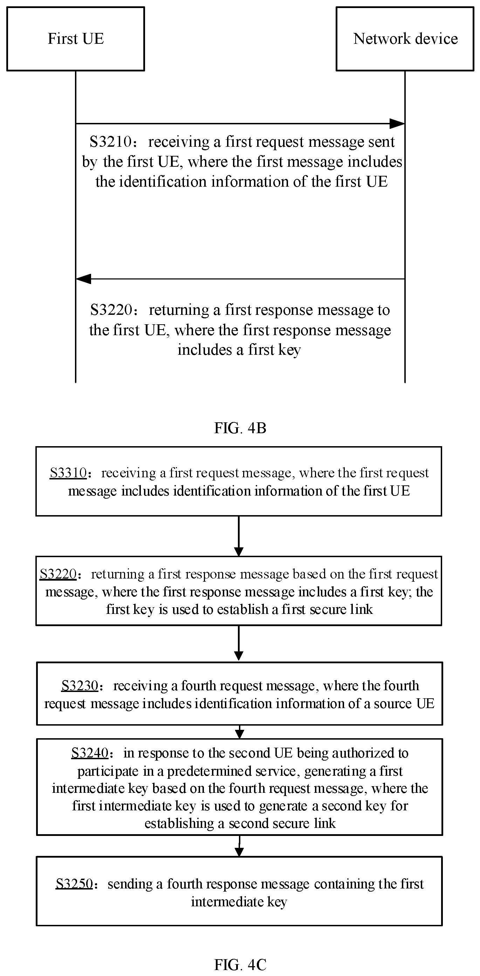

As shown in FIG. 4B, an embodiment of the present disclosure provides an information processing method performed by a network device, where the method includes the following steps.
S3210: receiving a first request message sent by the first UE, where the first message includes the identification information of the first UE;
S3220: returning a first response message to the first UE, where the first response message includes a first key; the first key is used by the first UE to establish a secure link.

In the embodiments of the present disclosure, as a PKMF or DDNMF, the network device will provide the first key to the first UE. The first key may be a root key or an intermediate key for the first UE to establish a secure link with other UEs (e.g., the second UE).

The second UE may be any UE that establishes an L3 secure link with the first UE. For example, if the predetermined service is a U2U relay service, the second UE may be a U2U relay. If the predetermined service is a ranging service, the second UE may be an auxiliary UE.

As shown in FIG. 4C, an embodiment of the present disclosure provides an information processing method performed by a network device, where the method includes the following steps.
S3310: receiving a first request message, where the first request message includes identification information of the first UE;
S3220: returning a first response message based on the first request message, where the first response message includes a first key; the first key is used to establish a first secure link;
S3230: receiving a fourth request message, where the fourth request message includes identification information of a source UE;
S3240: in response to the second UE being authorized to participate in a predetermined service, generating a first intermediate key based on the fourth request message; the first intermediate key is used to generate a second key for establishing a second secure link;
S3250: sending a fourth response message containing the first intermediate key.

Here, both the first secure link and the second secure link may involve three UEs, which can communicate through the first secure link and the second secure link.

It should be noted that the embodiment shown in FIG. 4C can be implemented alone or in combination with any embodiment in FIG. 4A to FIG. 4B.

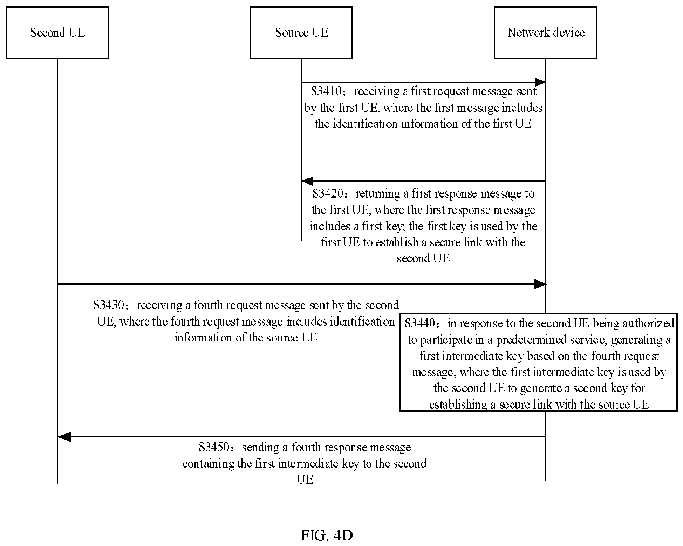

As shown in FIG. 4D, an embodiment of the present disclosure provides an information processing method performed by a network device, where the method includes the following steps.
S3410: receiving a first request message sent by the first UE, where the first message includes the identification information of the first UE;
S3420: returning a first response message to the first UE, where the first response message includes a first key; the first key is used by the first UE to establish a secure link with the second UE;
S3430: receiving a fourth request message sent by the second UE, where the fourth request message includes identification information of the source UE;
S3440: in response to the second UE being authorized to participate in a predetermined service, generating a first intermediate key based on the fourth request message; the first intermediate key is used by the second UE to generate a second key for establishing a secure link with the source UE;
S3450: sending a fourth response message containing the first intermediate key to the second UE.

To establish a secure link with the first UE, during the process of establishing a secure link with the first UE, the network device will receive a fourth request message sent by the second UE. The fourth request message at least includes the identification information of the source UE. If the network device has generated a first key for the source UE, it will store the identification information of the UE and its corresponding first key.

After receiving the fourth request message, the network device will query a preset storage location with the identification information of the source UE to determine the first key generated for the UE.

If the first key has been generated for the source UE, the network device can further generate the first intermediate key based on the first key.

The first intermediate key is carried in the fourth request message and returned to the second UE. In this way, the first key is not disclosed to the second UE, thereby reducing the security risk of the first key. At the same time, the first intermediate key can be used by the second UE to further generate a session key for establishing a secure link with the first UE, thereby assisting in establishing a secure link between the first UE and the second UE.

It should be noted that the embodiment shown in FIG. 4D can be implemented alone or in combination with any embodiment in FIG. 4A to FIG. 4C.

The determination of whether the second UE is authorized to participate in the predetermined service may include: querying the subscription data and/or service consent information of the second UE, or interacting with the ProSe Application Server (ProSe AS), to determine whether the second UE is authorized to participate in the predetermined service. For example, the network device determines whether the second UE is authorized to participate in the predetermined service by interacting with a ProSe application server. For example, if the second UE has subscribed to the predetermined service, it can be authorized to participate in the predetermined service; if the second UE has not subscribed to the predetermined service, it is not authorized to participate in the predetermined service.

As another example, according to the service agreement information provided by the server of the predetermined service, if the second UE has not activated the predetermined service or has not agreed to participate in the predetermined service, it can be considered that the second UE is not authorized to participate in the predetermined service. If the service agreement information indicates that the second UE has activated the predetermined service or agreed to participate in the predetermined service, it means that the second UE is authorized to participate in the predetermined service.

As yet another example, by interacting with the ProSe application server, the application server checks the authorization information of the second UE.

In some embodiments, the fourth request message includes a first freshness value. The first freshness value is used to generate the first intermediate key.

For example, the first freshness value is provided by the second UE to the network device for the second UE to generate the first intermediate key.

For example, the first freshness value may be provided by the first UE to the second UE which then forwards it to the network device.

After receiving the first freshness value, the network device combines it with the first key configured for the first UE to generate the first intermediate key.

In another embodiment, if the source UE does not provide the first freshness value to the second UE, the network device may generate a freshness value itself (i.e., the second freshness value) and use it along with the first key of the source UE to generate the first intermediate key.

If the source UE provides the first freshness value and the second UE sends it to the network device via the fourth request message, the network device will generate the first intermediate key based on the first freshness value from the source UE and the second freshness value it generates itself.

In some embodiments, the method further includes:
receiving a fifth request message, where the fifth request message at least includes the identification information of the target UE;
in response to the second UE being authorized to participate in the predetermined service, generating a fourth intermediate key based on the first key of the target UE, where the fourth intermediate key is used to generate a fifth key for establishing a second secure link; and
sending a fifth response message, where the fifth response message at least includes the fourth intermediate key.

The fifth request message may include the identification information of the target UE. After receiving the fifth request message, the network device can query the first key generated for the target UE.

The network device then generates the fourth intermediate key based on the first key of the target UE. If the second UE is authorized to participate in the predetermined service, the fourth intermediate key is carried in the fifth response message and returned to the sender of the fifth request message.

For example, the method may further include:
receiving a fifth request message sent by the second UE, where the fifth request message at least includes the identification information of the target UE;
in response to the second UE being authorized to participate in the predetermined service, generating a fourth intermediate key based on the first key of the target UE, where the fourth intermediate key is used by the second UE to generate a fifth key for establishing a secure link with the target UE; and
sending a fifth response message to the second UE, where the fifth response message at least includes the fourth intermediate key.

For example, the fifth request message may be sent after the second UE and the source UE have established a secure link. Of course, the fifth request message is not limited to being sent after the secure link between the second UE and the source UE is established.

In some embodiments, the fifth request message includes a fourth freshness value;

The fourth freshness value is used to generate the fourth intermediate key.

For example, if the fifth request message carries the fourth freshness value provided by the second UE, the network device can generate the fourth intermediate key based on the fourth freshness value.

If the fifth request message does not carry the freshness value provided by the second UE, the network device may generate a freshness value itself (i.e., the third freshness value). In this case, the network device can generate the fourth intermediate key based on the third freshness value, the fourth freshness value, and the first key.

According to the information processing method provided in the embodiments of the present disclosure, it is able to establish an L3 U2U secure link between the source terminal and the target terminal through a U2U relay, so as to provide integrity and confidentiality for information transmitted via the terminal-to-terminal relay. This ensures that the source terminal/target terminal can monitor and identify malicious attackers and act as terminal-to-terminal relays, and guarantees that the 5G PKMF can securely provide security parameters to the peer terminal and the U2U relay terminal.

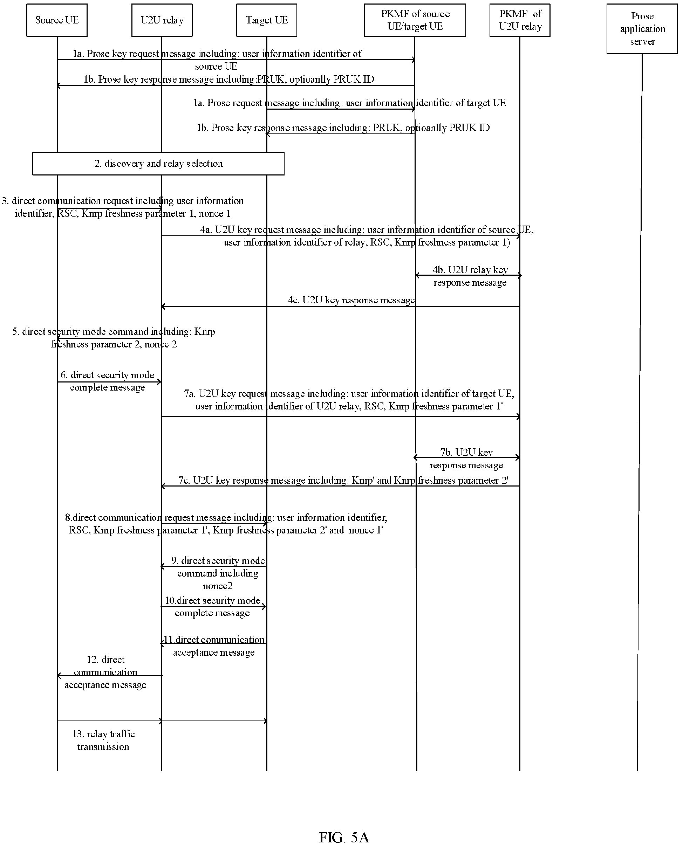

As shown in FIG. 5A, an embodiment of the present disclosure provides a method for securely establishing an L3 PC5 link, which can be used for ranging/sidelink positioning services. In the ranging/sidelink positioning service, the source UE and the target UE may be regarded as reference UEs, and the U2U relay may be regarded as an auxiliary UE.

1a. The source UE/target UE sends a ProSe key request message to its respective 5G PKMF/DDNMF. The ProSe key request message may include the user information identifier (ID) of the source UE/target UE. This ProSe key request message is used by the source UE/target UE to request a PRUK from the 5G PKMF/DDNMF. If the source UE and the target UE already have a PRUK from the 5G PKMF/DDNMF, the message may further include the PRUK ID in the request message.

1b. The 5G PKMF/DDNMF performs its own checks or interacts with the ProSe server to verify whether the source UE and the target UE are authorized to use the U2U relay service. If the source UE and the target UE are authorized to use the relevant service, the 5G PKMF/DDNMF sends the PRUK (corresponding to the aforementioned first key) and PRUK ID to the source UE/target UE. The PRUK ID is an optional parameter in the response returned by the 5G PKMF to the UE. If the PRUK and PRUK ID are included, the source UE and the target UE should store this information. If the source UE/target UE originally stored an old PRUK and PRUK ID, the newly received PRUK and PRUK ID will be used to update the stored information.

2. Using discovery parameters and discovery security parameters, the discovery and relay selection process is performed between the peer UE and the U2U relay. Assuming that after the discovery and relay selection process, the source UE and the target UE can discover each other and select the same U2U relay to establish an L3 U2U relay link.

3. The source UE sends a direct communication request to the U2U relay. The request content includes the source UE user ID, U2U relay user ID, target UE user ID, RSC, Knrp freshness parameter 1, and nonce parameter 1. Of course, the PRUK ID is an optional parameter in this direct communication request.

4a. The U2U relay sends a U2U key request message to its 5G PKMF, including the source UE user information ID, U2U relay user information ID, relay service code (RSC), Knrp freshness parameter 1 (corresponding to the first freshness value), and PRUK ID. This U2U key request message is used by the U2U relay to request Knrp from the PKMF/DDNMF. The PRUK ID is an optional parameter in this U2U key request message, meaning the message may or may not include the PRUK ID.

4b. Upon receiving the U2U relay request message, the 5G PKMF/DDNMF of the U2U relay checks whether the U2U relay is authorized to provide relay services. If there is no local authorization information for the U2U relay, the 5G PKMF should request authorization information from the UDM of the U2U relay. If the U2U relay is authorized to provide relay services, the 5G PKMF/DDNMF of the U2U relay sends a U2U key request to the 5G PKMF/DDNMF of the source UE, including the source UE user information ID, U2U relay user information ID, RSC, PRUK ID, and Knrp freshness parameter 1. This U2U relay request may or may not include the PRUK ID. Upon receiving the U2U key request message from the 5G PKMF/DDNMF of the U2U relay, the 5G PKMF/DDNMF of the source UE identifies the PRUK of the source UE based on the received user information identifier (User Info ID) of the source UE, then generates Knrp freshness parameter 2, and derives Knrp using the PRUK of the source UE, RSC, Knrp freshness parameter 1, and Knrp freshness parameter 2. The 5G PKMF/DDNMF of the source UE sends a U2U key response message containing Knrp and Knrp freshness parameter 2 to the 5G PKMF/DDNMF of the U2U relay.

4c. The 5G PKMF/DDNMF of the U2U relay forwards Knrp and Knrp freshness parameter 2 to the U2U relay by sending a U2U key request message.

5. The U2U relay should derive the KNRP session key (KNRP-sess) from Knrp, and then derive a confidentiality protection key (NRPEK) and/or an integrity protection key (NRPIK) (corresponding to the aforementioned session keys) according to the PC5 security policy. The U2U relay sends a direct security mode command message to the source UE. This message should include Knrp freshness parameter 2 (corresponding to the aforementioned second freshness value), random number 2 (nonce2), and should be protected in the specified manner.

6. The source UE responds a direct security mode complete message to the 5G ProSe U2U relay.

7a. The U2U relay sends a U2U key request message to its 5G PKMF/DDNMF. This U2U key request may include the target UE user information ID, U2U relay user information ID, RSC, and Knrp freshness parameter 1'. This U2U key request indicates that the U2U relay is requesting Knrp.

7b. If the U2U relay is authorized to provide relay services, the 5G PKMF/DDNMF of the U2U relay sends a U2U key request to the 5G PKMF/DDNMF of the target UE, including the target UE user information ID, U2U relay user information ID, RSC, and Knrp freshness parameter 1. Upon receiving the U2U key request message from the 5G PKMF/DDNMF of the U2U relay, the 5G PKMF/DDNMF of the target UE identifies the PRUK of the target UE based on the received user information identifier (User Info ID) of the target UE, then generates Knrp freshness parameter 2, and derives Knrp using the PRUK of the target UE, RSC, Knrp freshness parameter 1, and Knrp freshness parameter 2. The 5G PKMF/DDNMF of the target UE sends a U2U key response message containing Knrp and Knrp freshness parameter 2 to the 5G PKMF/DDNMF of the U2U relay.

7c. The 5G PKMF/DDNMF of the U2U relay forwards Knrp and Knrp freshness parameter 2 to the U2U relay by sending a U2U key request message.

8. The U2U relay sends a direct communication request to the target UE. This direct communication request includes the user information ID of the source UE, the user information ID of the U2U relay, the user information ID of the target UE, RSC, Knrp freshness parameter 1', Knrp freshness parameter 2' (corresponding to the aforementioned third freshness value), and random parameter 1'.

9. The target UE should derive Knrp and the Knrp session key (Knrp-sess) from Knrp, and then derive a confidentiality key (NRPEK) (if applicable) and an integrity key (NRPIK) (corresponding to the aforementioned session keys) according to the PC5 security policy. The target UE sends a direct security mode command message to the U2U relay. This message should include nonce2'.

10. The U2U relay responds with a direct security mode complete message.

11. After receiving the direct security mode complete message from the U2U relay, the target UE sends a direct communication acceptance message to the U2U relay.

12. After receiving the direct communication acceptance message, the U2U relay sends a direct communication acceptance message to the source UE.

13. An L3 PC5 secure link is established between the source UE and the target UE through the U2U relay. The U2U relay can relay traffic between the peer ProSe UEs.

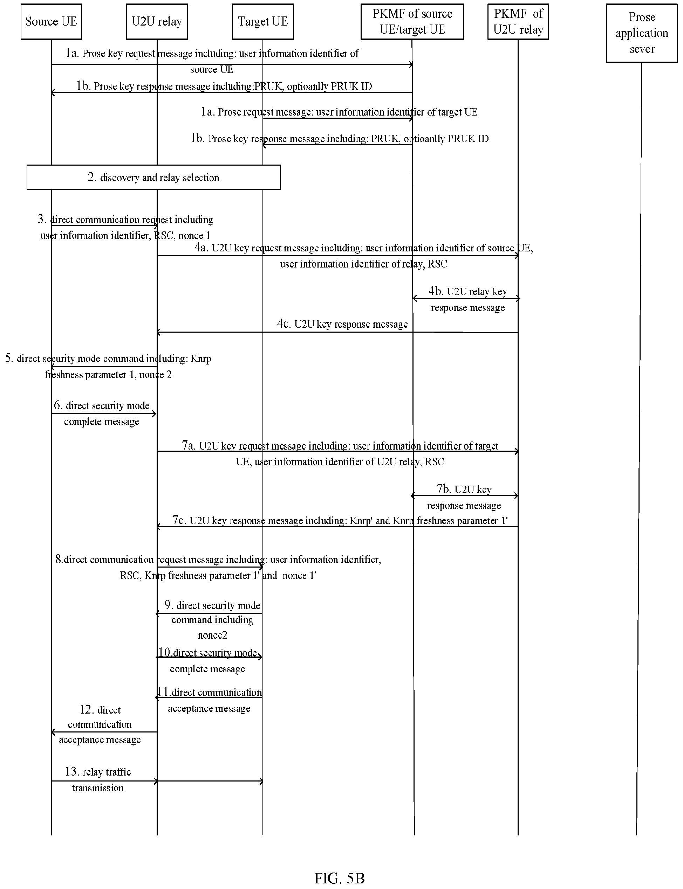

As shown in FIG. 5B, an embodiment of the present disclosure provides an information processing method, which may include the following steps.

1a. The source UE/target UE sends a ProSe key request message to its respective 5G PKMF/DDNMF. The ProSe key request message may include the user information identifier (ID) of the source UE/target UE. This ProSe key request message is used by the source UE/target UE to request a PRUK from the 5G PKMF/DDNMF. If the source UE/target UE already has a PRUK from the 5G PKMF/DDNMF, the message may further include the PRUK ID in the request message.

1b. The 5G PKMF/DDNMF performs its own checks or interacts with the ProSe server to verify whether the source UE and the target UE are authorized to accept the U2U relay service. If the source UE and the target UE are authorized to use the relevant service, the 5G PKMF/DDNMF sends the PRUK (corresponding to the aforementioned first key) and PRUK ID to the source UE/target UE. The PRUK ID is an optional parameter in the response returned by the 5G PKMF to the UE. If the PRUK and PRUK ID are included, the source UE and the target UE should store this information. If the source UE/target UE originally stored an old PRUK and PRUK ID, the newly received PRUK and PRUK ID will be used to update the stored information.

2. Using discovery parameters and discovery security parameters, the discovery and relay selection process is performed between the peer UE and the U2U relay. Assuming that after the discovery and relay selection process, the source UE and the target UE can discover each other and select the same U2U relay to establish an L3 U2U relay link.

3. The source UE sends a direct communication request to the U2U relay. The request content includes the source UE user ID, U2U relay user ID, target UE user ID, RSC, nonce parameter 1, and PRUK ID (optional).

4a. The U2U relay sends a U2U key request message to its 5G PKMF/DDNMF, including the source UE user information ID, U2U relay user information ID, relay service code (RSC), and PRUK ID. This U2U key request message is used by the U2U relay to request Knrp from the PKMF/DDNMF. The PRUK ID is an optional parameter in this U2U key request message, meaning the message may or may not include the PRUK ID.

4b. Upon receiving the U2U relay request (Key Request) message, the 5G PKMF/DDNMF of the U2U relay checks whether the U2U relay is authorized to provide relay services. If there is no local authorization information for the U2U relay, the 5G PKMF/DDNMF should request authorization information from the UDM of the U2U relay. If the U2U relay is authorized to provide relay services, the 5G PKMF/DDNMF of the U2U relay sends a U2U key request to the 5G PKMF/DDNMF of the source UE, including the source UE user information ID, U2U relay user information ID, RSC, and PRUK ID. This U2U relay request (Key Request) may or may not include the PRUK ID.

Upon receiving the U2U key request message from the 5G PKMF/DDNMF of the U2U relay, the 5G PKMF/DDNMF of the source UE identifies the PRUK of the source UE based on the received user information identifier (User Info ID) of the source UE, then generates Knrp freshness parameter 1, and derives Knrp using the PRUK of the source UE, RSC, and Knrp freshness parameter 1. The 5G PKMF/DDNMF of the source UE sends a U2U key response message containing Knrp and Knrp freshness parameter 1 to the 5G PKMF/DDNMF of the U2U relay.

4c. The 5G PKMF/DDNMF of the U2U relay forwards Knrp and Knrp freshness parameter 1 to the U2U relay by sending a U2U key request message.

5. The U2U relay should derive the KNRP session key (KNRP-sess) from Knrp, and then derive a confidentiality protection key (NRPEK) and/or an integrity protection key (NRPIK) (corresponding to the aforementioned session keys) according to the PC5 security policy. The U2U relay sends a direct security mode command message to the source UE. This message should include Knrp freshness parameter 1, random number 2 (nonce2), and should be protected in the specified manner.

6. The source UE responds with a direct security mode complete message to the 5G ProSe U2U relay.

7a. The U2U relay sends a U2U key request message to its 5G PKMF/DDNMF. This U2U key request may include the target UE user information ID, U2U relay user information ID, and RSC. This U2U key request indicates that the U2U relay is requesting Knrp.

7b. If the U2U relay is authorized to provide relay services, the 5G PKMF/DDNMF of the U2U relay sends a U2U key request to the 5G PKMF/DDNMF of the target UE, including the target UE user information ID, U2U relay user information ID, and RSC.

Upon receiving the U2U key request message from the 5G PKMF/DDNMF of the U2U relay, the 5G PKMF/DDNMF of the target UE identifies the PRUK of the target UE based on the received user information identifier (User Info ID) of the target UE, then generates Knrp freshness parameter 1', and derives Knrp using the PRUK of the target UE, RSC, and Knrp freshness parameter 1'. The 5G PKMF of the target UE sends a U2U key response message containing Knrp and Knrp freshness parameter 1' to the 5G PKMF/DDNMF of the U2U relay.

7c. The 5G PKMF/DDNMF of the U2U relay forwards Knrp and Knrp freshness parameter 1' to the U2U relay by sending a U2U key request message.

8. The U2U relay sends a direct communication request to the target UE. This direct communication request includes the user information ID of the source UE, the user information ID of the U2U relay, the user information ID of the target UE, RSC, Knrp freshness parameter 1', and random parameter 1'.

9. The target UE should derive Knrp and the KNR session key (Knrp-sess) from Knrp, and then derive a confidentiality key (NRPEK) (if applicable) and an integrity key (NRPIK) (corresponding to the aforementioned session keys) according to the PC5 security policy. The target UE sends a direct security mode command message to the U2U relay. This message should include nonce 2'.

10. The U2U relay responds with a direct security mode complete message.

11. After receiving the direct security mode complete message from the U2U relay, the target UE sends a direct communication acceptance message to the U2U relay.

12. After receiving the direct communication acceptance message, the U2U relay sends a direct communication acceptance message to the source UE.

13. An L3 PC5 secure link is established between the source UE and the target UE through the U2U relay. The U2U relay can relay traffic between the peer ProSe UEs.

Optionally, the source UE/target UE should be able to request a PRUK from its PKMF/DDNMF by sending a ProSe key request containing the user information ID of the source UE/target UE. This PRUK corresponds to the aforementioned first key.

Optionally, the U2U relay should be able to request Knrp by sending a U2U key request message to its PKMF. This Knrp may correspond to the first intermediate key of aforementioned source UE or the fourth intermediate key of the target UE.

Optionally, the U2U relay sends a direct communication request (DCR) message to the target UE. The U2U relay should store the Knrp shared between the source UE and the U2U relay, as well as the Knrp shared between the target UE and the U2U relay.

Optionally, the U2U relay should be able to include the UserInfoID of the source UE/target UE and the UserInfoID of the U2U relay in the U2U key request message.

Optionally, the 5G PKMF/DDNMF should be able to generate a PRUK associated with the user information ID.

Optionally, the 5G PKMF/DDNMF should be able to store the user information ID.

Optionally, the 5G PKMF/DDNMF should be able to query the corresponding PRUK based on the user information ID.

Optionally, the 5G PKMF/DDNMF of the U2U relay should be able to send a U2U key request message to the 5G PKMF/DDNMF of the source UE/target UE to obtain Knrp based on the received U2U key request message.

Optionally, the 5G PKMF/DDNMF of the U2U relay should be able to provide Knrp by sending a U2U key response message to the U2U relay.

Optionally, the 5G PKMF of the source UE/target UE should be able to check whether the source UE/target UE is authorized to receive the U2U relay service or ranging service.

Optionally, the 5G PKMF/DDNMF of the U2U relay should be able to check whether the U2U relay is authorized to provide the U2U relay service or ranging service.

Any of the above embodiments can be implemented alone or in any combination without conflict.

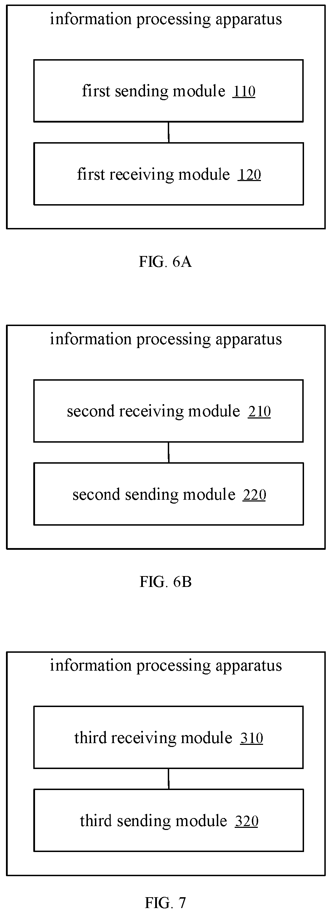

As shown in FIG. 6A, an embodiment of the present disclosure provides an information processing apparatus, where the apparatus includes: a first sending module 110 configured to send a first request message, where the first request message includes identification information of the first UE; a first receiving module 120 configured to receive a first response message returned based on the first request message, where the first response message includes a first key generated based on the identification information of the first UE; the first key is used by the first UE to establish a secure link.

This information processing apparatus may be the first UE.

In one embodiment, the first sending module 110 and the first receiving module 120 may correspond to a network interface and/or transceiver antenna. It can be understood that the first response message further includes an identifier of the first key.

It can be understood that the first sending module 110 is further configured to, in response to the first UE being a source UE, send a second request message, where the second request message includes identification information of the first UE; the second request message is used to request the establishment of a secure link.

It can be understood that the first receiving module 120 is further configured to receive a first designated message returned based on the second request message, where the first designated message is protected for security using a second key; the second key is generated based on a first intermediate key, where the first intermediate key is generated according to the first key.

The information processing apparatus further includes: a processing module configured to generate a second intermediate key according to the first key; generate a third key according to the second intermediate key; perform a security verification on the first designated message using the third key; determine whether to establish a secure link based on whether the first designated message passes the security verification.

The processing module may include, but is not limited to, a processor. It can be understood that the processing module may be configured to determine to establish a secure link when the security verification is passed; and/or refuse to establish a secure link when the security verification is not passed.

In some embodiments, the second request message includes a first freshness value, where the first freshness value is used to generate the first intermediate key and the second intermediate key.

For example, the second request message includes a first random number, where the first random number and the second intermediate key are jointly used to generate the third key.

It can be understood that the first designated message further includes a second freshness value, where the second freshness value is further used by the network device to generate the first intermediate key and the second intermediate key.

It can be understood that the first designated message further includes a second random number; the second random number and the second intermediate key are used to generate the third key.

It can be understood that the first receiving module 120 is configured to, in response to the first UE being a target UE, receive a third request message, where the third request message includes a third freshness value.

The information processing apparatus further includes: a processing module configured to generate a third intermediate key according to the third freshness value and the first key; generate a fourth key according to the third intermediate key; the first sending module 110 is further configured to send a second designated message protected for security using the fourth key.

In some embodiments, the third freshness value is used to generate a fourth intermediate key, where the fourth intermediate key is used to generate a fifth key for verifying the second designated message.

It can be understood that the third request message includes a third random number; the third random number is used to generate the fourth key and the fifth key.

It can be understood that the second designated message at least includes a fourth random number; the fourth random number is used to generate the fourth key and the fifth key, respectively.

As shown in FIG. 6B, an embodiment of the present disclosure provides an information processing apparatus, where the apparatus includes: a second receiving module 210 configured to receive a second request message, where the second request message includes identification information of a source UE; a second sending module 220 configured to send a fourth request message based on the second request message; the second receiving module 210 is further configured to receive a fourth response message returned based on the fourth request message, where the fourth response message at least includes a first key of the source UE, where the first key is used to establish a secure link.

This information processing apparatus may be the second UE.

In one embodiment, the second sending module 220 and the second receiving module 210 may correspond to a network interface and/or transceiver antenna.

For example, the second sending module 220 and the second receiving module 210 may be program modules; the program modules are executed by a processor.

It is understandable that the second request message and the fourth request message both include: a first freshness value, where the first freshness value is used by a network device to generate a first intermediate key and a second intermediate key, where the first intermediate key is used to generate a second key for establishing a secure connection.

It is understandable that the second request message further includes: a first random number, where the first random number is used to generate the second key in combination with the first intermediate key.

It is understandable that the second sending module 220 is further configured to send a first designated message based on the fourth response message.

It is understandable that the first designated message includes: a second freshness value, where the second freshness value is used to generate a third key for verifying the security of the first designated message.

It is understandable that the fourth response message includes: a first intermediate key, where the first intermediate key is used to generate the second key.

It is understandable that the information processing apparatus further includes: a processing module, further configured to establish a first secure link after the first designated message passes a security verification.

It is understandable that the second sending module 220 is further configured to send a fifth request message after the first designated message passes the security verification, where the fifth request message includes: identification information of the target UE.

The second receiving module 210 is configured to receive a fifth response message returned based on the fifth request message.

It is understandable that the fifth response message includes: a third freshness value, where the third freshness value is used to generate a third intermediate key and a fourth intermediate key.

The third intermediate key is used to generate a fourth key for establishing a second secure link.

The fourth intermediate used to generate a fifth key for establishing the second secure link.

It is understandable that the second sending module 220 is further configured to send a third request message based on the fifth response message.

The second receiving module 210 is further configured to receive a second designated message returned based on the third request message.

The information processing apparatus further includes: a processing module, configured to verify the security of the second designated message using the fifth key; and determine whether to establish the second secure link based on a verification result of the security of the second designated message.

It is understandable that the processing module is configured to establish the second secure link after the verification of the second designated message using the fifth key is passed.

As shown in FIG. 7, an embodiment of the present disclosure provides an information processing apparatus, where the apparatus includes:
a third receiving module 310, configured to receive a first request message, where the first message includes: identification information of a first UE;
a third sending module 320, configured to return a first response message based on the first request message, where the first response message includes a first key generated based on the identification information of the first UE;
the first key is used to establish a secure link.

The information processing apparatus may include a network device.

In one embodiment, the third receiving module 310 and the third sending module 320 may correspond to a network interface and/or a transceiver antenna.

For example, the third receiving module 310 and the third sending module 320 may be program modules, where the program modules, when executed by a processor, can implement the above operations.

As another example, the third receiving module 310 and the third sending module 320 may be a combination of software and hardware modules, where the combination of software and hardware modules may include, but is not limited to, a programmable array, where the programmable array may include, but is not limited to, a field-programmable array and/or a complex programmable array.

As yet another example, the first sending module and the first receiving module may be pure hardware modules, where the pure hardware modules include, but are not limited to, application-specific integrated circuits.

It is understandable that the third receiving module 310 configured to receive a fourth request message, where the fourth request message includes: identification information of a source UE.

The information processing apparatus further includes:
a processing module, configured to generate a first intermediate key based on the fourth request message; and send a fourth response message containing the first intermediate key to the second UE, where the first intermediate key is used to generate a second key for establishing a secure link.

In some embodiments, the fourth request message includes: a first freshness value, where the first freshness value is used to generate the first intermediate key.

It is understandable that the third receiving module 310 is further configured to receive a fifth request message, where the fifth request message at least includes: identification information of the target UE.

The information processing apparatus further includes: a processing module, configured to generate a fourth intermediate key based on the first key of the target UE, where the fourth intermediate key is used to generate a fifth key for establishing a secure link.

The third sending module 320 is further configured to send a fifth response message, where the fifth response message at least includes: the fourth intermediate key.

In some embodiments, the fifth request message includes a fourth freshness value, where the fourth freshness value is used to generate the fourth intermediate key.

In some embodiments, the fifth request message further includes: a third freshness value, where the third freshness value is used to generate the fourth intermediate key.

An embodiment of the present disclosure provides a communication system, which may include: a first UE, configured to perform any of the aforementioned information processing methods performed by the first UE; a second UE, configured to perform any of the aforementioned information processing methods performed by the second UE; a network device, configured to perform any of the aforementioned information processing methods performed by the network device.

An embodiment of the present disclosure provides a communication device, including: a memory for storing processor-executable instructions; a processor, connected to the memory, where the processor is configured to perform any of the aforementioned information processing methods provided by the technical solutions.

The processor may include various types of storage media, where the storage medium is a non-transitory computer storage medium that can continue to store information thereon after the communication device is powered off.

Here, the communication device includes: the aforementioned first UE, the aforementioned second UE, and/or the network device.

The processor may be connected to the memory via a bus or the like, and is configured to read executable programs stored in the memory, such as at least one of the methods shown in FIGS. 2A to 2G, FIGS. 3A to 3D, and FIGS. 4A to 4D.

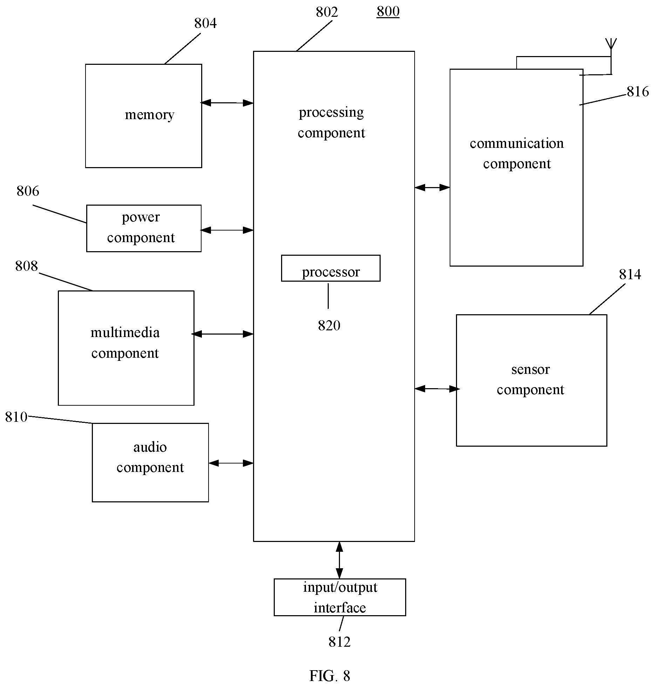

FIG. 8 is a block diagram of a UE 800 according to an exemplary embodiment. For example, the UE 800 may be a mobile phone, computer, digital broadcast user equipment, messaging device, game console, tablet device, medical device, fitness device, personal digital assistant, etc.

Referring to FIG. 8, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as operations associated with display, phone calls, data communication, camera operations, and recording operations. The processing component 802 may include one or more processors 820 to execute instructions to perform all or part of the steps of the above method. In addition, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operations of the UE 800. The power component 806 provides power to various components of the UE 800. The power component 806 may include a power management system, one or more power sources, and other components associated with generating, managing, and distributing power for the UE 800.

The multimedia component 808 includes a screen that provides an output interface between the UE 800 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, slides, and gestures on the touch panel. The touch sensors may sense not only the boundaries of a touch or slide action, but also the duration and pressure associated with the touch or slide operation. In some embodiments, the multimedia component 808 includes a front-facing camera and/or a rear-facing camera. When the UE 800 is in an operation mode, such as a shooting mode or a video mode, the front-facing camera and/or the rear-facing camera may receive external multimedia data. Each front-facing camera and rear-facing camera may be a fixed optical lens system focal length and optical zoom capabilities.

The audio component 810 is configured to output and/or input audio signals. For example, the audio component 810 includes a microphone (MIC), and in some embodiments, the audio component 810 further includes a speaker for outputting audio signals.

The I/O interface 812 provides an interface between the processing component 802 and peripheral interface modules, where the peripheral interface modules may be a keyboard, click wheel, buttons, etc. These buttons may include, but are not limited to: a home button, volume button, start button, and lock button.

The sensor component 814 includes one or more sensors for providing status assessments of various aspects of the UE 800. The communication component 816 is configured to facilitate wired or wireless communication between the UE 800 and other devices. In an exemplary embodiment, the UE 800 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components to perform the above method.

In an exemplary embodiment, there is also provided a non-transitory computer-readable storage medium including instructions, such as the memory 804 including instructions, where the instructions may be executed by the processor 820 of the UE 800 to perform the above method. For example, the non-transitory computer-readable storage medium may be ROM, random access memory (RAM), CD-ROM, magnetic tape, floppy disk, optical data storage device, etc.

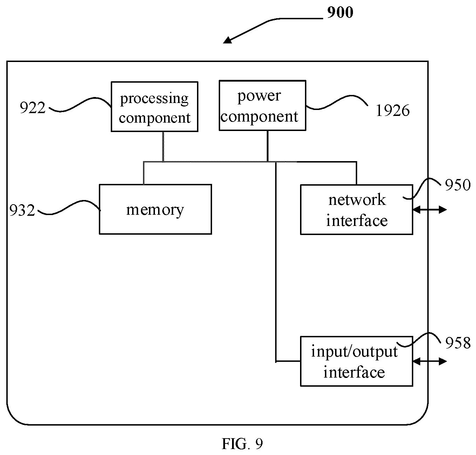

As shown in FIG. 9, an embodiment of the present disclosure illustrates a structure of an access device. For example, the network device 900 may be provided as a network device. The network device may include, but is not limited to, the aforementioned PKMF.

Referring to FIG. 9, the network device 900 includes a processing component 922, which further includes one or more processors, and memory resources represented by a memory 932 for storing instructions executable by the processing component 922, such as applications. The applications stored in the memory 932 may include one or more modules, each corresponding to a set of instructions. In addition, the processing component 922 is configured to execute the instructions to perform any of the aforementioned methods applied to the access device, such as any of the methods shown in FIGS. 4 to 9.

The network device 900 may further include a power component 926 configured to perform power management of the network device 900, a wired or wireless network interface 950 configured to connect the network device 900 to a network, and an input/output (I/O) interface 958. The network device 900 may operate based on an operating system stored in the memory 932, such as Windows Server^{™}, Mac OS X^{™}, Unix^{™}, Linux^{™}, FreeBSD^{™}, or the like.

Those skilled in the art will readily conceive of other embodiments of the present disclosure after considering the specification and practicing the invention disclosed herein. The present disclosure is intended to cover any variations, uses, or adaptive changes of the embodiments of the present disclosure, where such variations, uses, or adaptive changes follow the general principles of the embodiments of the present disclosure and include common general knowledge or conventional technical means in the art not disclosed in the present disclosure. The specification and examples are to be regarded as exemplary only, where the true scope and spirit of the embodiments of the present disclosure are indicated following claims.

It should be understood that the embodiments of the present disclosure are not limited to the precise structures described above and shown in the drawings, and that various modifications and changes may be made without departing from the scope thereof. The scope of the embodiments of the present disclosure is limited only by the appended claims.

## Claims

1. An information processing method, performed by a first user equipment (UE), comprising:
sending a first request message, wherein the first request message comprises identification information of the first UE; and
receiving a first response message returned based on the first request message, wherein the first response message comprises a first key generated based on the identification information of the first UE,
wherein the first key is used by the first UE to establish a secure link.

2. The method according to claim 1, wherein the first response message further comprises an identifier of the first key.

3. The method according to claim 1 or 2, further comprising:
in response to the first UE being a source UE, sending a second request message, wherein the second request message comprises the identification information of the first UE; the second request message is configured to request an establishment of the secure link.

4. The method according to claim 3, further comprising:
receiving a first designated message returned based on the second request message, wherein the first designated message is protected for security using a second key; the second key is generated based on a first intermediate key, wherein the first intermediate key is generated according to the first key;
generating a second intermediate key according to the first key;
generating a third key according to the second intermediate key;
performing a security verification on the first designated message using the third key; and
determining whether to establish the secure link, based on whether the first designated message passes the security verification.

5. The method according to claim 4, wherein determining whether to establish the secure link based on whether the first designated message passes the security verification comprises:
determining to establish the secure link when the security verification is passed; and/or
refusing to establish the secure link when the security verification is not passed.

6. The method according to claim 3, wherein the second request message comprises a first freshness value;
wherein the first freshness value is configured to generate the first intermediate key and the second intermediate key.

7. The method according to any one of claims 3 to 6, wherein the second request message comprises a first random number, wherein the first random number and the second intermediate key are jointly configured to generate the third key.

8. The method according to any one of claims 3 to 7, wherein the first designated message further comprises a second freshness value;
wherein the second freshness value is further used by a network device to generate the first intermediate key and the second intermediate key.

9. The method according to claim 7 or 8, wherein the first designated message further comprises a second random number; and
the second random number and the second intermediate key are configured to generate the third key.

10. The method according to claim 1 or 2, further comprising:
in response to the first UE being a target UE, receiving a third request message, wherein the third request message comprises a third freshness value;
generating a third intermediate key according to the third freshness value and the first key;
generating a fourth key according to the third intermediate key; and
sending a second designated message which is protected for security using the fourth key.

11. The method according to claim 10, wherein the third freshness value is configured to generate a fourth intermediate key, wherein the fourth intermediate key is configured to generate a fifth key for verifying the second designated message.

12. The method according to claim 11, wherein the third request message comprises a third random number; and the third random number is configured to generate the fourth key and the fifth key.

13. The method according to any one of claims 10 to 12, wherein the second designated message at least comprises a fourth random number; and
the fourth random number is configured to generate the fourth key and the fifth key respectively.

14. An information processing method, performed by a second user equipment (UE), comprising:
receiving a second request message, wherein the second request message comprises identification information of a source UE;
sending a fourth request message based on the second request message; and
receiving a fourth response message returned based on the fourth request message, wherein the fourth response message at least comprises a first intermediate key of the source UE, wherein the first intermediate key of the source UE is configured to establish a first secure link.

15. The method according to claim 14, wherein the second request message and the fourth request message both comprise a first freshness value; and
the first freshness value is used by a network device to generate the first intermediate key and a second intermediate key, wherein the first intermediate key is configured to generate a second key for establishing the secure connection.

16. The method according to claim 15, wherein the second request message further comprises a first random number;
wherein the first random number, in combination with the first intermediate key, is configured to generate the second key.

17. The method according to any one of claims 14 to 16, further comprising:
sending a first designated message based on the fourth response message.

18. The method according to claim 17, wherein the first designated message comprises a second freshness value; and
the second freshness value is configured to generate a third key for verifying a security of the first designated message.

19. The method according to claim 12 or 13, wherein the fourth response message comprises the first intermediate key; and
the first intermediate key is configured to generate the second key.

20. The method according to any one of claims 14 to 15, further comprising:
establishing the first secure link after the first designated message passes a security verification.

21. The method according to any one of claims 14 to 20, further comprising:
sending a fifth request message after the first designated message passes the security verification, wherein the fifth request message comprises identification information of a target UE;
receiving a fifth response message returned based on the fifth request message.

22. The method according to claim 21, wherein the fifth response message comprises a third freshness value, wherein the third freshness value is configured to generate a third intermediate key and a fourth intermediate key;
the third intermediate key is configured to generate a fourth key for establishing a second secure link;
the fourth intermediate key is configured to generate a fifth key for establishing the second secure link.

23. The method according to claim 22, further comprising:
sending a third request message based on the fifth response message;
receiving a second designated message returned based on the third request message;
verifying a security of the second designated message using the fifth key; and
determining whether to establish the second secure link based on a verification result of the security of the second designated message.

24. The method according to claim 23, wherein determining whether to establish the second secure link based on the verification result of the security of the second designated message comprises:
establishing the second secure link after a verification of the second designated message using the fifth key is passed.

25. An information processing method, performed by a network device, comprising:
receiving a first request message, wherein the first request message comprises identification information of a first user equipment (UE); and
returning a first response message based on the first request message, wherein the first response message comprises a first key generated based on the identification information of the first UE,
wherein the first key is configured to establish a secure link.

26. The method according to claim 25, further comprising:
receiving a fourth request message, wherein the fourth request message comprises identification information of a source UE;
generating a first intermediate key based on the fourth request message; and
sending a fourth response message containing the first intermediate key to a second UE;
wherein the first intermediate key is configured to generate a second key for establishing the secure link.

27. The method according to claim 26, wherein the fourth request message comprises a first freshness value; and
the first freshness value is configured to generate the first intermediate key.

28. The method according to claim 25, further comprising:
receiving a fifth request message, wherein the fifth request message at least comprises identification information of a target UE;
generating a fourth intermediate key based on the first key of the target UE, wherein the fourth intermediate key is configured to generate a fifth key for establishing the secure link; and
sending a fifth response message, wherein the fifth response message at least comprises the fourth intermediate key.

29. The method according to claim 28, wherein the fifth request message comprises a fourth freshness value; and
the fourth freshness value is configured to generate the fourth intermediate key.

30. The method according to any one of claims 28 to 29, wherein the fifth request message further comprises a third freshness value;
wherein the third freshness value is configured to generate the fourth intermediate key.

31. An information processing apparatus, comprising:
a first sending module configured to send a first request message, wherein the first request message comprises identification information of the first UE;
a first receiving module configured to receive a first response message returned based on the first request message, wherein the first response message comprises a first key generated based on the identification information of the first UE;
wherein the first key is used by the first UE to establish a secure link.

32. An information processing apparatus, comprising:
a second receiving module configured to receive a second request message, wherein the second request message comprises identification information of a source UE;
a second sending module configured to send a fourth request message based on the second request message;
wherein the second receiving module is further configured to receive a fourth response message returned based on the fourth request message, wherein the fourth response message at least comprises a first key of the source UE, and the first key is configured to establish a secure link.

33. An information processing apparatus, comprising:
a third receiving module configured to receive a first request message, wherein the first request message comprises identification information of a first user equipment (UE);
a third sending module configured to return a first response message based on the first request message, wherein the first response message comprises a first key generated based on the identification information of the first UE;
wherein the first key is configured to establish a secure link.

34. A communication device, comprising a processor, a transceiver, a memory and an executable program stored in the memory and runnable by the processor, wherein the processor runs the executable program to perform the method according to any one of claims 1 to 13, 14 to 24, or 25 to 30.

35. A computer storage medium having stored therein an executable program that, when executed by a processor, causes the method according to any one of claims 1 to 13, 14 to 24, or 25 to 30 to be implemented.

36. A communication system, comprising:
a first user equipment (UE), configured to perform the information processing method according to any one of claims 1 to 13;
a second UE, configured to perform the information processing method according to any one of claims 14 to 2; and
a network device configured to perform the information processing method according to any one of claims 25 to 30.
